# EUROPÄISCHE PATENTSCHRIFT

(11) **EP 1 386 719 B1**
(45) Veröffentlichungstag und Bekanntmachung des Hinweises auf die Patenterteilung: **16.07.2008**
(21) Anmeldenummer: 02017266.4
(22) Anmeldetag: 01.08.2002
(51) Int. Cl.: B29C 47/90

(54) **Vorrichtung zur Herstellung von Kunststofffolien**
Calibrating device for the maufacture of plastic films
Dispositif de calibrage pour la fabrication de feuilles en plastique

(43) Veröffentlichungstag der Anmeldung: 04.02.2004
(73) Patentinhaber: Reifenhäuser GmbH & Co. KG Maschinenfabrik, 53839 Troisdorf (DE)
(72) Erfinder: Helmut Meyer, 53842 Troisdorf (DE)
(74) Vertreter: Rohmann, Michael

(56) Entgegenhaltungen:
- EP-A- 0 906 823
- DE-A- 2 004 881
- US-A- 4 749 346
- US-A- 5 271 679
- US-A- 5 912 021

## Beschreibung

Die Erfindung betrifft eine Vorrichtung zur Herstellung von Kunststofffolien durch Erzeugung eines extrudierten thermoplastifizierten Kunststoffschlauches, wobei ein Kalibrierkorb als Hilfe zum Kalibrieren des extrudierten Kunststoffschlauches vorgesehen ist und wobei der Kalibrierkorb über den Umfang des Kalibrierkorbes verteilte Führungsstangen für die Führung des Kunststoffschlauches aufweist und wobei auf den Führungsstangen Folienführungsrollen angeordnet sind. -Die Erfindung betrifft also eine Blasfolienanlage und insbesondere die Ausgestaltung des Kalibrierkorbes bzw. der Führungsbügel des Kalibrierkorbes einer solchen Blasfolienanlage. Über den Umfang des Kalibrierkorbes bzw. über den Umfang des durchzuleitenden Kunststoffschlauches sind eine Mehrzahl von Führungsbügeln verteilt angeordnet. Diese Führungsbügel sind in der Regel bezüglich der Längsrichtung des Kalibrierkorbes (Durchlaufrichtung des Kunststoffschlauches) versetzt zueinander angeordnet. Auf einer Führungsstange eines Führungsbügels ist eine Mehrzahl von Folienführungsrollen nebeneinander vorgesehen. Die Führungsstange eines Führungsbügels ist zur Anpassung an die Form des Kunststoffschlauches gebogen ausgebildet.

Bei den aus der Praxis bekannten Vorrichtungen der eingangs genannten Art arbeiten die Folienführungsrollen nach dem Gleitlagerprinzip. Diese insbesondere aus Teflon bestehenden hohlzylindrischen Folienführungsrollen sind dabei unmittelbar auf den Führungsbügel bzw. auf die gebogene Führungsstange aufgesetzt. Die Gleitlagerrollen können auf der Führungsstange aufliegend um die Führungsstange rotieren, wenn ein Kunststoffschlauch durch den Kalibrierkorb geführt wird. Aus EP 0 906 823 A ist eine Vorrichtung bekannt, mit der extrudierte Kunststofffolien in einem Schlauchblasenkäfig geführt werden können und die aus zwei konzentrischen, gegeneinander verschiebbaren Rahmen besteht. In dem Rahmen werden Stäbe gehalten, die durch Stangen miteinander verbunden sind. An den Stangen wird die zu bearbeitende Folie vorbeigeführt, wobei auf den Stangen zur Reibungsreduktion Rollen angeordnet sind. Aus DE 20 04 881 A ist ebenfalls eine Kalibriervorrichtung bekannt, bei der auf den den Schlauch umschließenden, gebogenen Stützsegmenten ein drehbarer Belag oder Stützröllchen angeordnet sind. Das aber hat beachtliche Nachteile. Die Folienführungsrollen haben in der Regel in nachteilhafter Weise nur an zwei Stellen Berührungskontakt mit der Führungsstange. Durch die entsprechende Reibungsarbeit entsteht Reibungswärme, die die Gleitflächen dieser Folienführungsrollen zum Anschmelzen bringen kann. Das kann dazu führen, dass die betreffende Folienführungsrolle nicht mehr rotieren kann und solche feststehenden Folienführungsrollen erzeugen dann sehr unerwünschte Streifenmarkierungen auf der Folie. Im Übrigen kann bei diesen auf dem Führungsbügel frei beweglichen Folienführungsrollen die Schlauchfolie zwischen zwei benachbarten Folienführungsrollen eingequetscht werden, was ebenfalls erhebliche Qualitätseinbußen bedingen kann bzw. die Ausschussrate beachtlich erhöhen kann. Die bekannten Folienführungsrollen haben sich insbesondere bei klebrigen Folien als problematisch erwiesen. Die mit den bekannten Gleitlagerrollen verbundenen Reibmomente sind im Ergebnis zu hoch. Im Übrigen neigen die bekannten Folienführungsrollen zu unerwünschten sog. Umlaufschwingungen, bei denen Rotationsachse und Rollenmittelachse nicht übereinanderliegen. Die bekannte Vorrichtung ist deshalb verbesserungsbedürftig.

Der Erfindung liegt das technische Problem zugrunde, eine Vorrichtung der eingangs genannten Art anzugeben, bei der die vorstehend geschilderten Nachteile effektiv vermieden werden können.

Zur Lösung dieses technischen Problems lehrt die Erfindung eine Vorrichtung der eingangs genannten Art, welche dadurch gekennzeichnet ist, dass die Führungsrollen als Wälzlagerrollen ausgebildet sind, dass die Folienführungsrollen jeweils einen Innenring aufweisen, der auf einer zugeordneten Führungsstange so fixiert ist, dass er weder um die Führungsstange drehbar ist noch in Längsrichtung um die Führungsstange verschiebbar ist und dass die Führungsrollen einen drehbaren Außenring aufweisen, der sich über Wälzkörper auf dem Innenring abstützt und um die zugeordnete Führungsstange sowie um den auf der Führungsstange fixierten zugeordneten Innenring drehbar ist.

Erfindungsgemäß weist eine Wälzlagerrolle einen Innenring auf, der fest auf dem Führungsbügel angeordnet ist und einen drehbaren Außenring auf, der sich über Wälzkörper auf dem Innenring abstützt. Fest angeordneter Innenring meint dabei, dass der Innenring erfindungsgemäß nicht drehbar bzw. nicht verschiebbar auf dem Führungsbügel bzw. auf der Führungsstange fixiert ist. Der Außenring ist dagegen aufgrund der Wälzlagerung drehbar. Der Innenring und/oder der Außenring bestehen zweckmäßigerweise aus einem Kunststoff. Nach einer Ausführungsform der Erfindung bestehen die Wälzkörper aus Metall, vorzugsweise aus Stahl. Nach einer anderen Ausführungsform können die Wälzkörper auch aus Glas bestehen. - Die Oberfläche des Außenringes ist bevorzugt mit einer Antihaftbeschichtung versehen. Insbesondere diese Ausführungsform eignet sich vor allem auch für klebrige Schlauchfolien.

Es liegt fernerhin im Rahmen der Erfindung, dass zwischen den auf einem Führungsbügel angeordneten benachbarten Wälzlagerrollen jeweils ein Abstandsspalt eingerichtet ist. Dieser Abstandsspalt ist vorzugsweise 0,5 mm bis wenige Millimeter breit.

Der Erfindung liegt die Erkenntnis zugrunde, dass mit der erfindungsgemäßen Vorrichtung eine überraschend funktionssichere und störungsfreie Führung und Kalibrierung des Kunststoffschlauches möglich ist. Störende hohe Reibmomente werden durch die erfindungsgemäße Ausgestaltung der Folienführungsrollen als Wälzlagerrollen effektiv minimiert. Im Vergleich zu der aus dem Stand der Technik bekannten Vorrichtung werden im Betrieb der erfindungsgemäßen Vorrichtung feststehende nicht mehr rotierende Folienführungsrollen nicht beobachtet und somit werden auch die damit verbundenen eingangs geschilderten beachtlichen Nachteile vermieden. Auch Quetschungen der Folie zwischen benachbarten Folienführungsrollen können vollständig verhindert werden. Im Ergebnis können mit der erfindungsgemäßen Vorrichtung die mit den aus der Praxis bekannten Vorrichtungen verbundenen Nachteile allesamt minimiert bzw. vollkommen vermieden werden. Zu betonen ist auch, dass bereits vorhandene bzw. in Betrieb genommene Vorrichtungen problemlos mit den erfindungsgemäßen Komponenten nachgerüstet werden können und zwar auf verhältnismäßig einfache und kostengünstige Weise.

Nachfolgend wird die Erfindung anhand einer lediglich ein Ausführungsbeispiel darstellenden Zeichnung näher erläutert. Es zeigen in schematischer Darstellung:
- Fig. 1: eine Frontansicht eines Kalibrierkorbes einer erfindungsgemäßen Vorrichtung,
- Fig. 2: einen Schnitt A-A durch den Gegenstand nach Fig. 1,
- Fig. 3: einen Teil eines Führungsbügels einer Vorrichtung nach dem Stand der Technik und
- Fig. 4: eine erfindungsgemäße Folienführungsrolle.

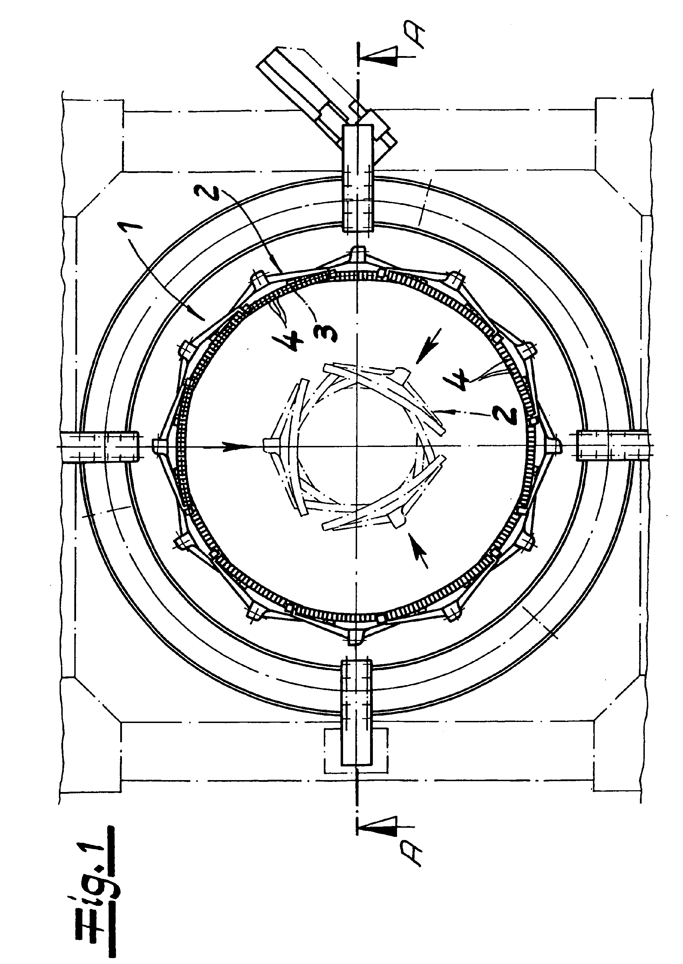

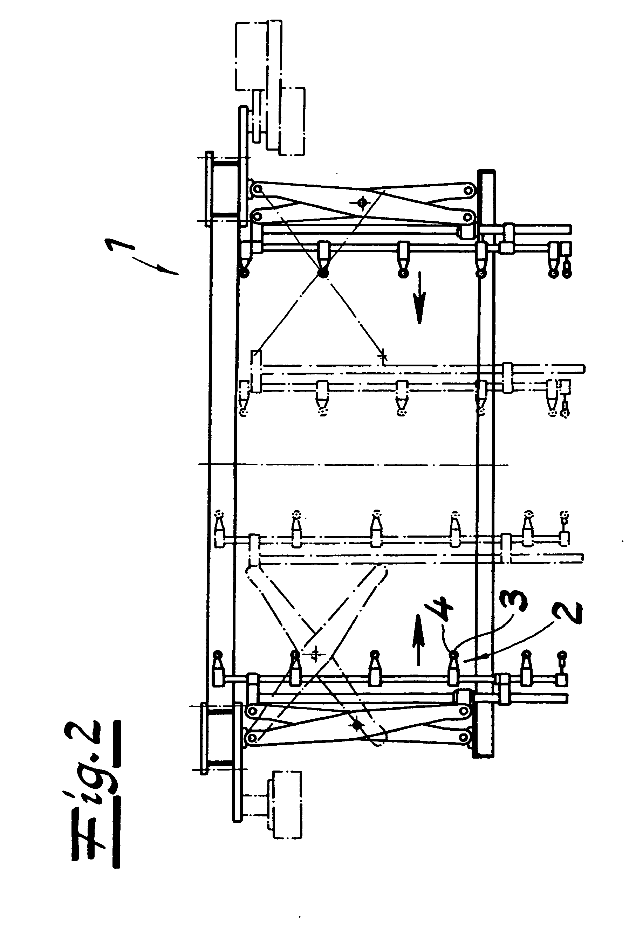

Die Figuren betreffen eine Vorrichtung zur Herstellung von Kunststofffolien durch Erzeugung eines nicht dargestellten extrudierten thermoplastifizierten Kunststoffschlauches. Die Vorrichtung weist einen Kalibrierkorb 1 als Hilfe zum Kalibrieren des extrudierten Kunststoffschlauches auf und dieser Kalibrierkorb 1 ist mit Führungsbügeln 2 für die Führung des Kunststoffschlauches ausgerüstet. Auf den Führungsbügeln 2 bzw. auf gebogenen Führungsstangen 3 sind Folienführungsrollen 4 angeordnet. An diesen Folienführungsrollen 4 wird der Kunststoffschlauch geführt, wenn er den Kalibrierkorb 1 durchläuft. In den Fig. 1 und 2 ist erkennbar, dass eine Mehrzahl von Führungsbügeln 2 mit Führungsstangen 3 über den Umfang des Kalibrierkorbes 1 verteilt angeordnet sind. Die Führungsbügel 2 sind dabei versetzt angeordnet. In den Fig. 1 und 2 ist durch Pfeile angedeutet worden, dass die Führungsbügel in radialer Richtung verschiebbar sind, damit eine Anpassung an den Durchmesser des Kunststoffschlauches stattfinden kann. Die Führungsstangen 3 sind aufgrund der zylindrischen Form des Kunststoffschlauches gebogen ausgebildet.

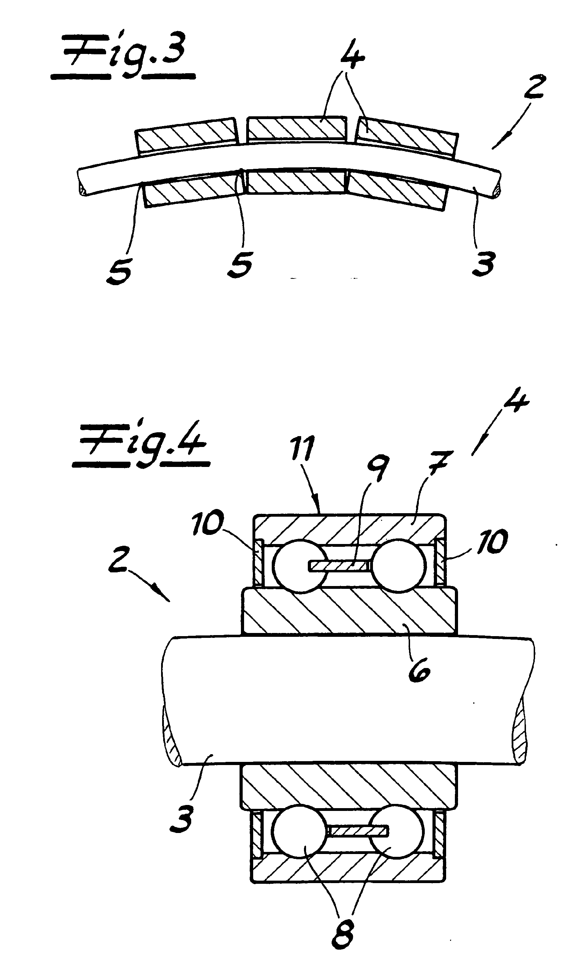

In der Fig. 3 ist ein Teil einer Führungsstange 3 einer Vorrichtung nach dem Stand der Technik dargestellt. Hier sind die Folienführungsrollen 4 als Gleitlagerrollen ausgebildet. Diese Folienführungsrollen 4 sind hohlzylindrisch ausgeführt und unmittelbar auf die Führungsstange 3 aufgesetzt, so dass jeder Hohlzylinder um die Führungsstange 3 rotieren kann. In der Figur ist angedeutet worden, dass diese aus dem Stand der Technik bekannten Folienführungsrollen 4 in der Regel lediglich an zwei Berührungspunkten 5 die Führungsstange 3 berühren. Das ist aus den vorstehend bereits erläuterten Gründen sehr nachteilhaft.

Fig. 4 zeigt dagegen eine auf eine Führungsstange 3 aufgesetzte erfindungsgemäße Folienführungsrolle 4, die als Wälzlagerrolle ausgebildet ist. Diese erfindungsgemäße Folienführungsrolle 4 weist einen Innenring 6 auf, der auf der Führungsstange 3 so fixiert ist, dass er weder um die Führungsstange 3 drehbar ist noch in Längsrichtung der Führungsstange 3 verschiebbar ist. Auf dem Innenring 6 stützt sich ein Außenring 7 über Wälzkörper 8 ab. Der Außenring 7 ist also um die Führungsstange 3 und um den darauf fixierten Innenring 6 drehbar. Die Wälzlagerrolle ist im Übrigen in an sich üblicher Weise mit einem Käfig 9 zur Aufnahme der Wälzkörper 8 sowie mit Deckscheiben 10 ausgestattet. Die Wälzkörper 8 können aus einem Metall, beispielsweise aus Stahl oder auch aus Glas bestehen. Der Innenring 6 und der Außenring 7 bestehen zweckmäßigerweise aus einem Kunststoff. Nach einer bevorzugten Ausführungsform der Erfindung ist die Oberfläche 11 des Außenringes 7 mit einer nicht dargestellten Antihaftbeschichtung versehen.

Es versteht sich, dass auf einer Führungsstange 3 mehrere erfindungsgemäße Folienführungsrollen 4 bzw. Wälzlagerrollen nebeneinander angeordnet sind. Es liegt im Rahmen der Erfindung, dass zwischen jeweils zwei erfindungsgemäßen Folienführungsrollen 4 ein schmaler Abstandsspalt ausgebildet ist.

## Patentansprüche

1. Vorrichtung zur Herstellung von Kunststofffolien durch Erzeugung eines extrudierten thermoplastifizierten Kunststoffschlauches, wobei ein Kalibrierkorb (1) als Hilfe zum Kalibrieren des extrudierten Kunststoffschlauches vorgesehen ist und wobei der Kalibrierkorb (1) über den Umfang des Kalibrierkorbs verteilte Führungsstangen (3) für die Führung des Kunststoffschlauches aufweist, wobei auf den Führungsstangen (3) Folienführungsrollen (4) angeordnet sind, **dadurch gekennzeichnet, dass** die Folienführungsrollen (4) als Wälzlagerrollen ausgebildet sind,
dass die Folienführungsrollen (4) jeweils einen Innenring (6) aufweisen, der auf einer zugeordneten Führungsstange (3) so fixiert ist, dass er weder um die Führungsstange drehbar ist noch in Längsrichtung um die Führungsstange verschiebbar ist,
und dass die Folienführungsrollen (4) einen drehbaren Außenring (7) aufweisen, der sich über Wälzkörper (8) auf dem Innenring (6) abstützt und um die zugeordnete Führungsstange (3) sowie um den auf der Führungsstange (3) fixierten zugeordneten Innenring (6) drehbar ist.

2. Vorrichtung nach Anspruch 1, **dadurch gekennzeichnet, dass** der Innenring (6) und/oder der Außenring (7) aus einem Kunststoff besteht.

3. Vorrichtung nach einem der Ansprüche 1 oder 2, **dadurch gekennzeichnet, dass** die Oberfläche (11) des Außenringes (7) mit einer Antihaftbeschichtung versehen ist.

4. Vorrichtung nach einem der Ansprüche 1 bis 3, **dadurch gekennzeichnet, dass** zwischen den auf einem Führungsbügel (2) angeordneten Wälzlagerrollen jeweils ein Abstandsspalt eingerichtet ist.

## Claims

1. A device for manufacturing plastic foils by generating an extruded, thermoplastified, plastic tube, where a calibration pail (1) is provided as an aid to calibrating the extruded, plastic tube, the calibration pail (1) has guide rails (3) for guiding the plastic tube distributed around its circumference, and foil guide rollers (4) are arranged on the guide rails (3), wherein the foil guide rollers (4) are configured in the form of roller-bearing rollers,
every foil guide roller (4) has an inner collar (6) that is attached to an associated guide rail (3) such that it is neither free to rotate about the guide rail nor free to slide along the guide rail
and the foil guide rollers (4) have a rotatable, outer collar (7) that abuts against the inner collar (6) via the intermediation of rollers (8) and is rotatable about both the associated guide rail (3) and the associated inner collar (6) attached to the guide rail (3).

2. A device according to claim 1, wherein the inner collar (6) and/or the outer collar (7) is/are fabricated from a plastic.

3. A device according to claim 1 or claim 2, wherein the surface (11) of the outer collar (7) is provided with an anti-adhesion coating.

4. A device according to any of claims 1 to 3, wherein clearances are set up between adjacent roller-bearing rollers arranged on a guide bail (2).

## Revendications

1. Dispositif de fabrication de feuilles en matière plastique par production d'un tuyau flexible en matière plastique thermoplastifié extrudé, dans lequel une cage de calibrage (1) est prévue en tant qu'aide pour le calibrage du tuyau flexible en matière plastique extrudé, et dans lequel la cage de calibrage (1) présente des tiges de guidage (3) réparties sur son pourtour pour le guidage du tuyau flexible en matière plastique, des rouleaux de guidage de feuilles (4) étant disposés sur les tiges de guidage (3), **caractérisé en ce que**
- les rouleaux de guidage de feuilles (4) sont réalisés sous forme de rouleaux de paliers à roulement,
- es rouleaux de guidage de feuilles (4) présentent respectivement un anneau intérieur (6), qui est fixé sur une tige de guidage associée (3) de sorte qu'il ne peut ni tourner autour de la tige de guidage ni être déplacé autour de la tige de guidage dans la direction longitudinale,
- et les rouleaux de guidage de feuilles (4) présentent un anneau extérieur rotatif (7), qui s'appuie par l'intermédiaire d'un corps de roulement (8) sur l'anneau intérieur (6) et peut tourner autour de la tige de guidage associée (3) ainsi qu'autour de l'anneau intérieur (6) associé, fixé sur la tige de guidage (3).

2. Dispositif suivant la revendication 1, **caractérisé en ce que** l'anneau intérieur (6) et/ ou l'anneau extérieur (7) se compose d'une matière plastique.

3. Dispositif suivant l'une des revendications 1 et 2, **caractérisé en ce que** la surface (11) de l'anneau extérieur (7) est munie d'un revêtement anti-adhésif.

4. Dispositif suivant l'une des revendications 1 à 3, **caractérisé en ce qu'**une fente d'écartement est réalisée entre chacun des rouleaux de paliers à roulement disposés sur un étrier de guidage (2).
